# NEUE EUROPÄISCHE PATENTSCHRIFT

(11) **EP 0 523 057 B2**
(45) Veröffentlichungstag und Bekanntmachung des Hinweises auf die Entscheidung über den Einspruch: **03.01.2001**
(45) Hinweis auf die Patenterteilung: 12.04.1995
(21) Anmeldenummer: 91903628.5
(22) Anmeldetag: 31.01.1991
(51) Int. Cl.: A61C 17/22

(54) **ELEKTRISCHE ZAHNBÜRSTE**
ELECTRIC TOOTHBRUSH
BROSSE A DENTS ELECTRIQUE

(43) Veröffentlichungstag der Anmeldung: 20.01.1993
(73) Patentinhaber: Elektro-Wärme-Technik Siegfried Petz, 90431 Nürnberg (DE)
(72) Erfinder: HAFTMANN, Johannes, D-8540 Schwabach (DE); PETZ, Günter, D-8500 Nürnberg (DE)
(74) Vertreter: Göbel, Matthias, Dipl.-Ing.
(86) Internationale Anmeldenummer: EP9100176
(87) Internationale Veröffentlichungsnummer: WO9213499

(56) Entgegenhaltungen:
- EP-A- 0 158 870
- CH-A- 609 238
- DE-A- 2 016 984
- DE-C- 3 117 160
- DE-C- 3 414 623
- GB-A- 2 097 663
- JP-U- 55 023 191
- US-A- 3 588 936
- US-A- 4 476 604
- US-A- 4 680 825

## Beschreibung

Die Erfindung betrifft eine elektrische Zahnbürste gemäß dem ersten Teil von Anspruch 1.

Eine derartige Zahnbürste ist allgemein im Stand der Technik bekannt.

Elektrische Zahnbürsten weisen den Mangel auf, daß der Benutzer unter dem Einfluß der motorisch erzeugten Schwingbewegungen oder Teildrehungen des Bürstenkörpers die jeweilige Andruckkraft des Bürstenkörpers an Zähnen und Zahnfleisch nicht sicher erkennen kann, wodurch häufig unzulässige Andruckkräfte zur Anwendung gebracht werden. Hierdurch sind Verletzungen möglich und die Benutzung elektrischer Zahnbürsten unsicher.

Es ist Aufgabe der Erfindung Maßnahmen zur sicheren Benutzung und Erkennen der Andruckkraft zu schaffen.

Der Erfindung gemäß ist diese Aufgabe dadurch gelöst, daß das Zahnbürstengehäuse (1) einstükkig ausgebildet ist und den Antriebsmotor (2) und die Getriebe (3,4;5,6,7;10,12) ortsfest aufnimmt, daß die Antriebswelle (13) quer zur Mittellängsachse derselben aus einer Ruhestellung entgegen einer Rückstellkraft verschwenkbar ist und daß bei Erreichen einer medizinisch notwendigen Andruckkraft am Bürstenkörper (23) die Antriebswelle (13) unmittelbar eine im Zahnbürstengehäuse (1) untergebrachte Einrichtung (19,20) zur Erzeugung oder Einleitung von akustischen und/oder optischen Signalen betätigt,
wobei die Antriebswelle (13) gemeinsam mit mindestens einem Teilstück (9') des Lagerbocks (9) um eine Gelenkstelle (24) bei Erreichen der medizinisch notwendigen Andruckkraft entgegen der Rückstellkraft verschwenkbar ist und die Einrichtung zur Erzeugung oder Einleitung von akustischen (21,27,28) und/oder optischen Signalen (22) betätigt
und daß bei vorbestimmtem Überschreiten der medizinisch notwendigen Andruckkraft der Antriebsmotor (2) und die Einrichtung zur Erzeugung oder Einleitung von akustischen (19,20,21,22,27, 28) und/oder optischen Signalen stillgesetzt werden. Auf diese Weise ist die Möglichkeit gegeben, den Bürstenkörper verletzungsfrei an Zähnen und Zahnfleisch anzudrücken, bis in Abhängigkeit der Andruckkraft dem Benutzer das akustische oder optische Signal gegeben wird. Darüberhinaus ist auch möglich bei vorbestimmten Überschreiten der medizinisch notwendigen Andruckkraft gegebenenfalls den Antriebsmotor und die Signaleinrichtung stillzusetzen. Durch das Unterbrechen der Signalgaben werden dem Benutzer die Beendigung der Funktion des Antriebs für den Bürstenkörper mitgeteilt und gleichzeitig die Voraussetzung zur Vermeidung nachteiliger Wirkungen an Zähnen und Zahnfleisch durch den Bürstenkörper gegeben.

In Ausgestaltung der Zahnbürste ist vorgesehen, daß die Antriebswelle bei Erreichen der medizinisch notwendigen Andruckkraft unmittelbar ein im Stromkreis des Antriebsmotors angeordnetes Schaltglied einer elektrischen Einrichtung zur Erzeugung von akustischen und/oder optischen Signalen betätigt. Das Schaltglied kann durch einen Ein-Ausschalter, der selbst oder mit einem Betätigungsglied in den Bewegungsbereich der Antriebswelle angeordnet ist, gebildet sein. Außerdem ist vorgesehen, die Rückstellkraft für die Antriebswelle durch ein zwischen dem Zahnbürstengehäuse und der Antriebswelle bzw. dem Zahnbürstengehäuse und einer die Antriebswelle umfassenden Lagerhülse oder zwischen dem Zahnbürstengehäuse und einem Lagerbock für die Antriebswelle eingespanntes Federelement, z.B. Tellerfeder zu bilden. Es ist denkbar, die Rückstellkraft beliebig anderweitig, z.B. durch eine Schrauben- oder Blattfeder bzw. durch einen Körper aus einem federnd elastischen Werkstoff, z.B. einem Gummikörper zu erzielen, wobei Letzterer durch die Andruckkraft verformbar ist und bei Nachlassen oder Beendigung der Andruckkraft durch Rückverformung seine ursprüngliche Gestalt reproduzierbar annimmt und die Antriebswelle in die Ruhestellung zurückbewegt. Von besonderem Vorteil ist es, wenn die Rückstellkraft veränderlich einstellbar ist, wodurch die Andruckkraft individuell anpaßbar ist und akustische und/oder optische Signale bei unterschiedlich starken Andrucken erreichbar sind.

In Ausgestaltung der Zahnbürste ist vorgesehen, daß die Antriebswelle in durch Kuppelglieder miteinander verbundene Antriebswellenabschnitte unterteilt ist, daß der dem Antriebsmotor zugenäherte Antriebswellenabschnitt in einem gehäusefesten Lagerbock geführt und der dem Antriebsmotor abgewandte Antriebswellenabschnitt im Zahnbürstengehäuse ortsveränderlich gelagert ist und daß der lezterwähnte Antriebswellenabschnitt bei Erreichen der medizinisch notwendigen Andruckkraft entgegen der Rückstellkraft quer verschieblich und/oder verschwenkbar ist und die Einrichtung zur Erzeugung oder Einleitung akustischer und/oder optischer Signale betätigt. In Fortbildung der Zahnbürste besteht auch die Möglichkeit, die Antriebswelle gemeinsam mit mindestens einem Teilstück des Lagerbocks um eine Gelenkstelle bei Erreichen der medizinisch notwendigen Andruckkraft entgegen der Rückstellkraft verschwenkbar auszubilden. Schließlich ist noch vorgesehen, die Antriebswelle gemeinsam mit mindestens einem Teilstück des Lagerbocks bei Erreichen der medizinisch notwendigen Andruckkraft entgegen Biegespannungen gegebenenfalls unterstützt durch eine weitere Rückstellkraft abbiegbar auszubilden und die Antriebswelle oder das Teilstück des Lagerbocks unmittelbar zur Betätigung der Einrichtung der Erzeugung oder Einleitung akustischer und/oder optischer Signale zu nutzen. Bevorzugt ist die Antriebswelle und das Teilstück des Lagerbocks um eine im Lagerbock vorbereitete Einschnürung, od.dgl. abbiegbar. Es versteht sich, daß zu Abbiegungen die Exzenter- und Kurbelschleifengetriebe eine gewisse Bewegungsfreiheit bedürfen, die durch ein geringes Spiel zwischen den Getriebeelementen erreichbar ist. Außerdem ist die Möglichkeit vorgesehen, bei Abbiegungen des Lagerbocks Verkantungen im Untersetzungsgetriebe dadurch zu umgehen, daß die Achsen der Getrieberäder des Untersetzungsgetriebes sich im Bereich der Biegeebene erstrecken. Zweckmäßig ist darüberhinaus das Kurbelschleifengetriebe durch einen exzentrisch drehbaren Zapfen und zwei Kurbelwangen gebildet, deren einander zugewandten Begrenzungsflächen konvex zueinander gewölbt sind und Abbiegungen von Antriebswelle und Lagerbockteilen verklemmungsfrei ermöglichen.

Eine Vereinfachung der Ausgestaltung der Zahnbürste ist weiter dadurch erzielbar, daß die Zahnbürste bei Erreichen der medizinisch notwendigen Andruckkraft unmittelbar eine mechanische Einrichtung zur Erzeugung oder Einleitung von akustischen und/oder optischen Signalen betätigt. Eine solche Einrichtung kann durch einen durch die Antriebswelle drehbaren, mit Stiften, Zähnen oder Ansätzen bestückten Zylinderkörper und mindestens einer am Zahnbürstengehäuse angeordneten Federzunge oder Ratsche gebildet sein. Die Zähne, Stifte oder Ansätze können in der Umfangsfläche oder in einer Ausnehmung, z.B. einer Ringnut des Zylinderkörpers ausgebildet sein. Von besonderem Vorteil hat sich auch die Zuordnung von zwei oder mehr Federzungen bzw. Ratschen zu mit Zähnen od.dgl. bestückten Zylinderkörpern erwiesen, die bei Erreichen der medizinisch notwendigen Andruckkraft und Anlaufen der Zähne od.dgl. mechanisch akustische Signale mit gleichen oder verschiedenen Frequenzen erzeugen. Die Signale können dabei gleichzeitig oder nacheinander erfolgen und dem Benutzer eine stufenweise Signalwirkung über die Andruckkräfte mitteilen. Die Einrichtung zur Erzeugung akustischer Signale kann weiterhin beliebig, z.B. durch einen auf der Antriebswelle angeordneten Drehkörper mit freigeführten Schlagkörpern und einer im Zahnbürstengehäuse eingestellten Glocke, Membrane oder einem Plattenkörper gebildet sein. Auch ist vorgesehen, zur Verstärkung der akustischen Signale im Zahnbürstengehäuse eine Schall- oder Resonanzkammer vorzusehen. Diese kann gegebenenfalls mit zunehmender Andruckkraft durch Betätigung eines die Resonanzkammer verschließenden Dekkelteils zu öffnen sein.

Als optische Signaleinrichtung ist in weiterer Ausgestaltung der Zahnbürste die Anordnung einer Diode oder Glühlampe vorgesehen, die im Stromkreis eines durch die Antriebswelle betätigbaren Ein-Ausschalter liegen. Die Diode bzw. die Glühlampe können eingefärbt sein oder zugeordnete, z.B. farbige Abdeckungen aufweisen, die gleichzeitig den Bereich des Durchgriffs von Diode bzw. Glühlampe im Zahnbürstengehäuse abdichten.

Schließlich ist noch vorgesehen, daß die Antriebswelle eine Austrittsöffnung im Zahnbürstengehäuse durchgreift und daß die Austrittsöffnung durch einen Balg aus einem flexiblen oder federnd elastischen Werkstoff dicht verschlossen ist.

Als Energiequelle kann fernerhin ein aufladbares galvanisches Element, z.B. eine Batterie oder ein Akkumulator dienen, die bevorzugt induktiv aufladbar sind. Die Sekundärwicklung der Ladeeinrichtung ist zweckmäßig im Zahnbürstengehäuse fest angeordnet, so daß durch einfaches Einstellen des Zahnbürstengehäuses in dem, z.B. an das Netz anliegenden Primärkreis der Ladeeinrichtung selbsttätig eine Aufladung der Stromquelle erfolgt.

Die Erfindung ist anhand von Ausführungsbeispielen in der Zeichnung verdeutlicht. Es zeigen:
- Fig. 1: eine Zahnbürste in Seitenansicht, teilweise im Schnitt,
- Fig. 2: eine Zahnbürste abgewandelter Ausführung in Seitenansicht, teilweise im Schnitt,
- Fig. 3 ein Teilschnitt einer anderweitigen Zahnbürste,
- Fig. 4: einen Schnitt nach der Linie IV-IV der Fig. 1, vergrößert,
- Fig. 5: einen Schnitt nach der Linie V-V der Fig. 3, vergrößert,
- Fig. 6: einen Schnitt nach der Linie VI-VI der Fig. 1, vergrößert,
- Fig. 7: einen Schnitt nach der Linie VII-VII der Fig. 3, vergrößert,
- Fig. 8: einen Teilschnitt einer Zahnbürste entsprechend einer weiteren Ausführungsform und
- Fig. 9: einen Schnitt nach der Linie IX-IX der Fig. 2.

In den Fig. ist mit 1 ein einstückiges Zahnbürstengehäuse bezeichnet, das einen Antriebsmotor 2 für einen Bürstenkörper 23 aufnimmt. Mit dem Ritzel 3 des Antriebsmotors 2 kämmt ein Getrieberad 4, die gemeinsam ein Untersetzungsgetriebe bilden. Das Getrieberad 4 dreht einen mit einer Kulissennut 5 versehenen Zylinderkörper 6, der zusammen mit einer einen Stift 7 aufweisenden verschieblichen Schwinge 8 einen Kulissentrieb bildet. Die Schwinge 8 ist in einem Lagerbock 9 geführt und weist Wangen 10,10' auf (Fig. 5) die mit einem in dem Zwischenraum 11 eintauchenden Zapfen 12 zusammen wirken, der fest mit dem Zylinderkörper 6 verbunden ist. Die Wangen 10,10' und der Zapfen 12 bilden ein Kurbelschleifengetriebe. Mit der verschieblichen Schwinge 8 steht eine Antriebswelle 13 für den Bürstenkörper 23 bei 14 in lösbar fester Verbindung.

Bei Umläufen des Antriebsmotors 2 wird über das Untersetzungsgetriebe, 3, 4, das Kulissengetriebe 5,6,8,16 und das Kurbelschleifengetriebe 10,10',12, die Antriebswelle 13 zwischen zwei axialen Endstellungen bewegt und teilgedreht. Diesen sich überlagernden Bewegungen folgt der Bürstenkörper 23.

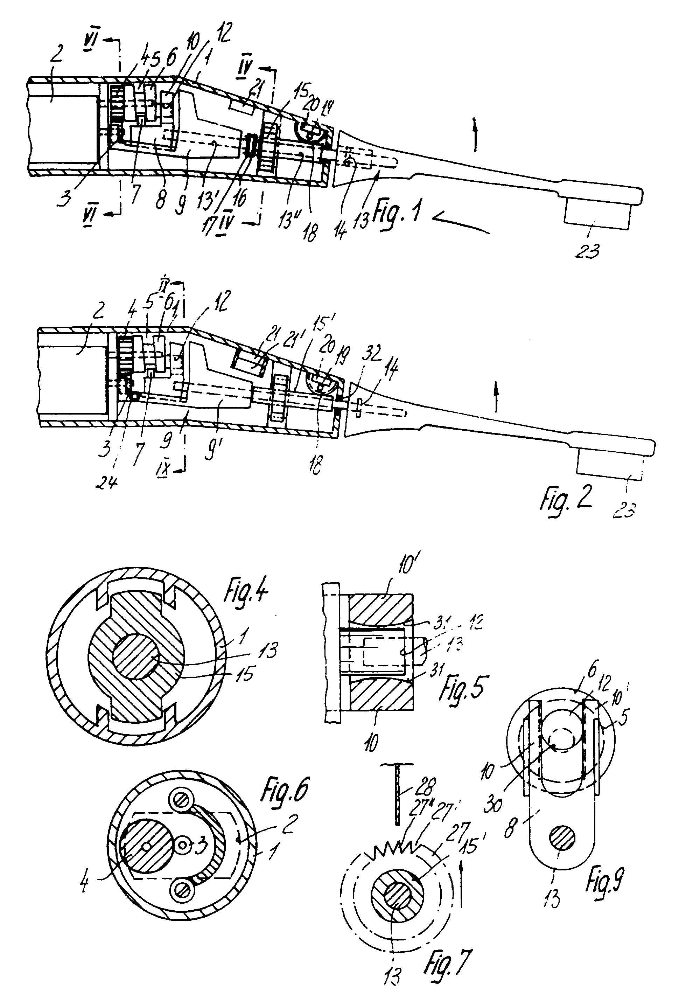

Beim Ausführungsbeispiel der Fig. 1 ist die Antriebswelle 13 bei 16 unterteilt. Die Antriebswellenabschnitte 13' und 13" sind durch ein Kuppelglied 17 schwenkbeweglich miteinander verbunden. Der Antriebswellenteil 13" ist hierzu in einem verschieblich im Zahnbürstengehäuse angeordneten Lager 15 (Fig. 4) mit Lagerhülse 15' geführt. Bei Erreichen der medizinisch notwendigen Andruckkraft am Bürstenkörper 23 wird der Antriebswellenabschnitt 13" zusammen mit der diesen umfassenden Lagerhülse 15' an die Tellerfeder 18 und entgegen der Vorspannung der Tellerfeder 18 an den Betätigungsstift 19 eines im Stromkreis einer akustischen Signaleinrichtung 21 liegenden Schalters 20 angedrückt.

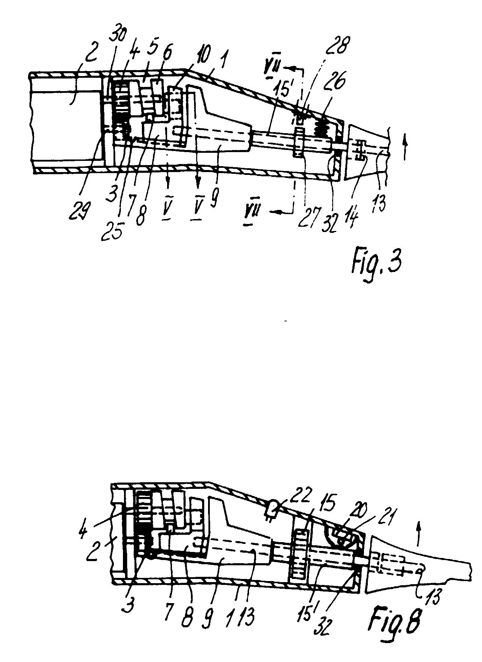

Durch den Signalton wird dem Benutzer mitgeteilt, daß eine vorbestimmte Andruckkraft erreicht ist. Der akustischen Signaleinrichtung 21 ist bei der Zahnbürste der Fig. 2 eine Resonanzkammer 21' zugeordnet, die zu einer Verstärkung der Signale beiträgt. Als akustische Signaleinrichtung 21 kann ein elektrischer Summer oder ein Läutewerk dienen. Abweichend kann im Stromkreis des EinAusschalters 20 auch eine optische Signaleinrichtung gelegt sein. Als optische Signaleinrichtung dient beim Ausführungsbeispiel der Fig. 8 eine Leuchtdiode 22.

Während beim Ausführungsbeispiel der Fig. 1 die Andruckkraft am Bürstenkörper 23 zu einer Abknickung des Antriebswellenabschnitts 13" führt ist abweichend beim Ausführungsbeispiel der Fig. 2 die Antriebswelle 13 unter dem Einfluß der Andruckkraft gemeinsam mit einem Teilstück 9' des Lagerbocks 9 um ein Gelenk 24 abschwenkbar. Bei Erreichen der medizinisch notwendigen Andruckkraft erfolgt entgegen der Vorspannung der Tellerfeder 18 durch Betätigen des Ein-Ausschalters 20 die Erzeugung oder Einleitung akustischer oder optischer Signale.

In Fig. 3 ist der Lagerbock 9 mitsamt der Antriebswelle 13 um eine Einschnürung 25 unter der Wirkung der medizinisch notwendigen Andruckkraft abbiegbar. Die Rückstellkraft wird dabei durch eine Schraubenfeder 26 aufgebracht. Außerdem werden die akustischen Signale auf mechanischem Wege, z.B. vermittels eines Zackenrades 27 (Fig. 7) und einer zugeordneten Federzunge 28 erzeugt. Bei Eintauchen der Federzunge in die Zwischenräume 27' der Zacken 27" wird bei Drehbewegungen der Antriebswelle 13 die Federzunge 28 zu Signaltönen in Schwingungen versetzt. Es versteht sich, daß in Abweichung der Ausbildung der Fig. 3 Abschwenkungen von Antriebswelle 13 und Lagerbock 9 auch um eine um 90 versetzte Biegeebene erfolgen können. Hierbei befinden sich die Achsen 29, 30 der Getrieberäder 3,4 mindestens annähernd in der Biegeebene, wodurch Verkantungen derselben ausgeschlossen sind.

## Patentansprüche

1. Elektrische Zahnbürste mit einem Zahnbürstengehäuse (1), in welchem ein Antriebsmotor (2), Schaltglieder für diesen und eine elektrischen Energiequelle sowie eine durch den Antriebsmotor (2), über ein Untersetzungsgetriebe mit nachgeschalteten Kulissen- und Kurbelschleifengetrieben (3,4;5,6,7;10,12) langsbewegund teildrehbare Antriebswelle (13) für einen mit der Antriebswelle koppelbaren Bürstenkörper aufgenommen sind, dadurch gekennzeich. net, daß das Zahnbürstengehäuse (1) einstükkig ausgebildet ist und den Antriebsmotor (2) und die Getriebe (3,4;5,6,7;10,12) ortsfest aufnimmt, daß die Antriebswelle (13) quer zur Mittellängsachse derselben aus einer Ruhestellung entgegen einer Rückstellkraft verschwenkbar ist und daß bei Erreichen einer medizinisch notwendigen Andruckkraft am Bürstenkörper (23) die Antriebswelle (13) unmittelbar eine im Zahnbürstengehäuse (1) untergebrachte Einrichtung (19,20) zur Erzeugung oder Einleitung von akustischen und/oder optischen Signalen betätigt,
wobei die Antriebswelle (13) gemeinsam mit mindestens einem Teilstück (9') des Lagerbocks (9) um eine Gelenkstelle (24) bei Erreichen der medizinisch notwendigen Andruckkraft entgegen der Rückstellkraft verschwenkbar ist und die Einrichtung zur Erzeugung oder Einleitung von akustischen (21,27,28) und/oder optischen Signalen (22) betätigt
und daß bei vorbestimmtem Überschreiten der medizinisch notwendigen Andruckkraft der Antriebsmotor (2) und die Einrichtung zur Erzeugung oder Einleitung von akustischen (19,20,21,22,27, 28) und/oder optischen Signalen stillgesetzt werden.

2. Elektrische Zahnbürste nach Anspruch 1, dadurch gekennzeichnet, daß die Antriebswelle (13) bei Erreichen der medizinisch notwendigen Andruckkraft unmittelbar ein im Stromkreis des Antriebsmotors (2) angeordnetes Schaltglied (19,20) einer elektrischen Einrichtung zur Erzeugung von akustischen und/oder optischen Signalen betätigt.

3. Elektrische Zahnbürste nach Anspruch 1, dadurch gekennzeichnet, daß die Rückstellkraft für die Antriebswelle (13) durch ein zwischen dem Zahnbürstengehäuse (1) und der Antriebswelle (13) bzw. dem Zahnbürstengehäuse (1) und einer die Antriebswelle (13) umfassenden Lagerhülse oder zwischen dem Zahnbürstengehäuse (1) und einem Lagerbock (9) für die Antriebswelle (13) eingespanntes Federelement (18,26), z.B. Tellerfeder, gebildet ist.

4. Elektrische Zahnbürste nach Anspruch 1 und 3, dadurch gekennzeichnet, daß die Rückstellkraft veränderlich einstellbar ist.

5. Elektrische Zahnbürste nach Anspruch 1, dadurch gekennzeichnet, daß die Antriebswelle (13) in durch Kuppelglieder (17) miteinander verbundene Wellenabschnitte (13', 13") unterteilt ist und daß der dem Antriebsmotor (2) zugenäherte Wellenabschnitt (13') in einem gehäusefesten Lagerbock (9) geführt und der dem Antriebsmotor (2) abgewandte Wellenabschnitt (13") im Zahnbürstengehäuse (1) ortsveränderlich gelagert ist und daß der Wellenabschnitt (13") bei Erreichen der medizinisch notwendigen Andruckkraft entgegen der Rückstellkraft querverschieblich und/oder verschwenkbar ist und die Einrichtung (19,20) zur Erzeugung oder Einleitung akustischer (21,27,28) und/oder optischer Signale (22) betätigt.

6. Elektrische Zahnbürste nach Anspruch 1, dadurch gekennzeichnet, daß die Antriebswelle (13) gemeinsam mit mindestens einem Teilstück des Lagerbocks (9) bei Erreichen der medizinisch notwendigen Andruckkraft entgegen einer Federkraft (26) und/oder Biegespannungen abbiegbar sind und daß die Antriebswelle (13) oder das Teilstück des Lagerbocks (9) dabei unmittelbar die Einrichtung zur Erzeugung oder Einleitung akustischer (27,28) und/oder optischer Signale (22) betätigt.

7. Zahnbürste nach Anspruch 6, dadurch gekennzeichnet, daß die Antriebswelle (13) und mindestens ein Teilstück des Lagerbocks (9) um eine im Lagerbock vorbereitete Einschnürung (25) abbiegbar sind.

8. Zahnbürste nach Anspruch 1, dadurch gekennzeichnet, daß das Kurbelschleifengetriebe durch einen exzentrisch umlaufenden Zapfen (12) und zwei Kurbelwangen (10, 10') gebildet ist und daß die einander zugewandten Begrenzungsflächen (31) der Kurbelwangen (10,10') konvex zueinander gewölbt sind.

9. Zahnbürste nach Anspruch 1, dadurch gekennzeichnet, daß die Antriebswelle (13) bei Erreichen der medizinisch notwendigen Andruckkraft unmittelbar eine mechanische Einrichtung (27,28) zur Erzeugung von akustischen Signalen betätigt.

10. Zahnbürste nach Anspruch 1, dadurch gekennzeichnet, daß die mechanische Einrichtung zur Erzeugung von akustischen Signalen durch einen auf der Antriebswelle (13) fest angeordneten und mit Stiften, Zähnen (27") oder Ansätzen bestückten Zylinderkörper (27) und mindestens einer am Zahnbürstengehäuse (1) angeordneten Federzunge (28) oder Ratsche gebildet ist.

11. Zahnbürste nach Anspruch 10, dadurch gekennzeichnet, daß die Zähne (27"), Stifte oder Ansätze in der Umfangsfläche oder in einer Ausnehmung des Zylinderkörpers (27) ausgebildet sind.

12. Zahnbürste nach Anspruch 10, gekennzeichnet durch zwei oder mehr unabhängigen Federzungen (28) oder Ratschen, die bei Erreichen der medizinisch notwendigen Andruckkraft und Anlaufen der Stifte, Zähne (27") oder Ansätze von Zylinderkörpern (27) mechanisch akustische Signale mit gleichen oder verschiedenen Frequenzen erzeugen.

13. Zahnbürste nach Anspruch 1, dadurch gekennzeichnet, daß die Einrichtung zur Erzeugung akustischer Signale durch einen auf der Antriebswelle angeordneten Drehkörper mit frei geführten Schlagkörpern und einer im Zahnbürstengehäuse (1) eingestellten Glocke, Membrane oder einem Plattenkörper gebildet ist.

14. Zahnbürste nach Anspruch 1, dadurch gekennzeichnet, daß der akustischen Signaleinrichtung eine im Zahnbürstengehäuse ausgebildete Schall- (21') und/oder Resonanzkammer zugeordnet ist.

15. Zahnbürste nach Anspruch 1, dadurch gekennzeichnet, daß die Einrichtung zur Erzeugung optischer Signale durch eine Leuchtdiode (LED) (22) oder eine Glühlampe und einen durch die Antriebswelle (13) unmittelbar betätigbaren Ein-Ausschalter (19,20) gebildet ist.

16. Zahnbürste nach Anspruch 1, dadurch gekennzeichnet, daß die Antriebswelle (13) eine Austrittsöffnung (32) im Zahnbürstengehäuse (1) durchgreift und daß die Austrittsöffnung (32) durch einen Balg aus einem flexiblen oder federnd elastischen Werkstoff dicht verschlossen ist.

17. Zahnbürste nach Anspruch 1, dadurch gekennzeichnet, daß als Energiequelle ein aufladbares galvanisches Element, z.B. Batterie, Akkumulator, dient.

18. Zahnbürste nach Anspruch 1, dadurch gekennzeichnet, daß das galvanische Element induktiv aufladbar ist und daß die Sekundärwicklung der Ladeeinrichtung im Zahnbürstengehäuse (1) fest angeordnet ist.

## Claims

1. Electric toothbrush, having a toothbrush housing (1) which accommodates a drive motor (2), switching members for said motor and a source of electric energy as well as a drive shaft (13), which is longitudinally displaceable and partially rotatable by the drive motor (2) via a reduction gear having subsequently connected slide and crank grinding transmissions (3,4;5,6,7;10,12), for driving a brush body which is connectable to the drive shaft, characterised in that the toothbrush housing (1) is a one-piece construction and accommodates the drive motor (2) and the transmissions (3,4;5,6, 7;10,12) in a fixed manner, in that the drive shaft (13) is pivotable relative to the central longitudinal axis of said shaft from an inoperative position in opposition to a restoring force, and in that, in the event of a medically required compressive force being reached at the brush body (23), the drive shaft (13) actuates directly a means (19,20), which is accommodated in the toothbrush housing (1), for generating or introducing acoustic and/or optical signals, whereby the drive shaft (13) ist jointly pivotable with at least one part (9') of the bearing block (9) about a pivot point (24) when the medically required compressive force is reached in opposition to the restoring force and actuates the means for generating or introducing acoustic signals (21,27,28) and/or optical signals (22) and in the event of the predetermined medically required compressive force being exceeded, the drive motor (2) and the means for generating or introducing acoustic signals (19,20,21, 22,27,28) and/or optical signals can be stopped.

2. Electric toothbrush according to claim 1, characterised in that, in the event of the medically required compressive force being reached, the drive shaft (13) actuates directly a switching member (19,20), which is disposed in the circuit of the drive motor (2) and belongs to an electric means for generating acoustic and/or optical signals.

3. Electric toothbrush according to claim 1, characterised in that the restoring force for the drive shaft (13) is formed by a resilient element (18,26), e.g. a plate spring, which is positioned between the toothbrush housing (1) and the drive shaft (13) or respectively between the toothbrush housing (1) and a bearing sleeve, which surrounds the drive shaft (13), or between the toothbrush housing (1) and a bearing block (9) for the drive shaft (13).

4. Electric toothbrush according to claims 1 and 3, characterised in that the restoring force is variably adjustable.

5. Electric toothbrush according to claim 1, characterised in that the drive shaft (13) is divided into shaft portions (13',13''), which are interconnected by coupling memers (17), and in that the shaft portion (13'), which is situates nearer the drive motor (2), extends in a bearing block (9) integral with the housing, and the shaft portion (13''), which is remote from the drive motor (2), is displaceably mounted in the toothbrush housing (1), and in that, in the event of the medically required compressive force being reached, the shaft portion (13'') is transversely displaceable and/or pivotable in opposition to the restoring force and actuates the means (19,20) for generating or introducing acoustic signals (21,27,28) and/or optical signals (22).

6. Electric toothbrush according to claim 1, characterised in that the drive shaft (13), is jointly deflectable with at least one part of the bearing block (9) when the medically required compressive force is reached in opposition to a restoring force (26) and/or bending stresses, and in that the drive shaft (13) or the part of the bearing block (9) thereby actuates directly the means for generating or introducing acoustic signals (27,28) and/or optical signals (22).

7. Electric toothbrush according to claim 6, characterised in that the drive shaft (13) and at least one part of the bearing block (9) are deflectable about a constricted portion (25) prepared in the bearing block.

8. Electric toothbrush according to claim 1, characterised in that the crank grinding transmision is formed by an eccentrically rotating journal (12) and two crank cheeks (10,10'), and in that the areas of contact (31), facing one another, of the crank cheeks (10,10') are curved convexly relative to one another.

9. Electric toothbrush according to claim 1, characterised in that, when the medically required compressive force ist reached, the drive shaft (13) actuates directly a mechanical means (27, 28) for generating acoustic signals.

10. Electric toothbrush according to claim 1, characterised in that the mechanical means for generating acoustic signals is formed by a cylindrical body (27), which is securedly disposed on the drive shaft (13) and provided with pins, teeth (27'') or attachments, and at least one resilient projection member (28) or ratchet disposed one the toothbrush housing (1).

11. Electric toothbrush according to claim 10, characterised in that the teeth (27''), pins or attachments are provided in the circumferential face or in a recess in the cylindrical body (27).

12. Electric toothbrush according to claim 11, characterised by two or more independent resilient projection members (28) or ratchets, which generate mechanically acoustic signals having identical or different frequencies when the medically required compressive force is reached and the pins, teeth (27'') or attachments of cylindrical bodies (27) are approached.

13. Electric toothbrush according to claim 1, characterised in that the means for generating acoustic signals is formed by a rotatable body, which is disposed on the drive shaft and provided with freely quided strikers and a bell, which is installed in the toothbrush housing (1), diaphragms or a plate-shaped body.

14. Electric toothbrush according to claim 1, characterised in that a sound box (21') and/or resonance chamber, provided in the toothbrush housing, is associated with the acoustic signalling means.

15. Electric toothbrush according to claim 1, characterised in that the means for generating optical signals is formed by a light emitting diode (LED) (22) or an incandescent lamp and an on/off switch (19,20), which is directly or indirectly actuatable by the drive shaft (13).

16. Electric toothbrush according to claim 1, characterised in that the drive shaft (13) extends through an outlet aperture (32) in the toothbrush housing (1), and in that the outlet aperture (32) is tightly sealed by a bellows formed from a flexible or resiliently elastic material.

17. Electric toothbrush according to claim 1, characterised in that a chargeable, electrolytic element, e.g. a battery or an accumulator, serves as the source of energy.

18. Electric toothbrush according to claim 17, characterised in that the electrolytic element is inductively chargeable, and in that the secondary winding of the charging means is securedly disposed in the toothbrush housing (1).

## Revendications

1. Brosse à dents électrique, comportant un boîtier de brosse à dents (1), dans lequel sont reçus un moteur d'entraînement (2) des organes de commutation pour celui-ci, et une source d'énergie électrique, ainsi qu'un arbre d'entraînement longitudinalement déplaçable et partiellement rotatif (13) par le moteur d'entraînement (2), par l'intermédiaire d'un démultiplicateur comportant des mécanismes à manivelle et coulisse disposés en aval (3,4;5,6, 7;10,12) pour un corps de brosse pouvant être couplé à l'arbre d'entraînement, caractérisée en ce que le boîtier de la brosse à dents (1) est réalisé en une seule pièce et reçoit de façon stationnaire le moteur d'entraînement (2) et les mécanismes (3,4;5,6,7;10,12), en ce que l'arbre d'entraînement (13) peut pivoter à l'axe longitudinal médian de celui-ci hors d'une position de repos à l'encontre d'une force de rappel, et en ce que, lorsqu'une force de pressage médicalement nécessaire sur le corps de brosse (23) est atteinte, l'arbre d'entraînement (13) actionne, drectement un dispositif (19,20), agencé dans le boîtier (1) de la presse à dents, pour créer ou introduire des signaux acoustiques et/ou optiques et en ce que l'arbre d'entraînement (13) peut pivoter, avec au moins une partie (9') du palier (9), autour d'une ariculation (24), lorsque la force de pressage médicalement nécessaire est atteinte, à l'encontre de la force de rappel, et actionne le dispositif pour engendrer ou introduire des signaux acoustiques (21,27,28) et/ou optiques (22) et en ce que lorsque la force de pressage médicalement nécessaire est dépassée de façon prédéterminée,le moteur d'entraînement (2) et le dispositif pour engendrer ou introduire des signaux acoustiques et/ou optiques (19,20,21,22,27,28) peuvent être arrêtés.

2. Brosse à dents électrique selon la revendication 1, caractérisée en ce que l'arbre d'entraînement (13, lorsque la force de pressage médicalement nécessaire est atteinte, actionne, directement un organe de commutation (19,20), agencé dans le circuit du moteur d'entraînement (2), d'un dispositif électrique pour engendrer des signaux acoustiques et/ou optiques.

3. Brosse à dents électrique selon la revendication 1, caractérisée en ce que la force de rappel pour l'arbre d'entraînement (13) est formée par un élément élastique (18,26) par exemple un ressort à disques, serré entre boîtier (1) de la brosse à dents et l'arbre d'entraînement (13) ou le boîtier (1) de la brosse à dents et une douille de palier entourant l'arbre d'entraînement (13) ou entre le boîtier (1) de la brosse à dents et un palier (9) pour l'arbre d'entraînement (13).

4. Brosse à dents électrique selon les revendications 1 et 3, caractérisée en ce que la force de rappel est réglable de façon modifiable.

5. Brosse à dents électrique selon la revendication 1, caractérisée en ce que l'arbre d'entraînement (13) est subdivisé en tronçons d'arbre (13',13'') reliés ensemble par des organes de couplage (17), et en ce que le tronçon d'arbre (13'), voisin du moteur d'entraînement (2), est guidé dans un palier (9) solidaire du boîtier et le tronçon d'arbre (13'') éloigné du moteur d'entraînement (2) est monté dans le boîtier (1) de la brosse à dents en un emplacement modifiable, et en ce que le tronçon d'arbre (13''), lorsque la force de pressage médicalement nécessaire est atteinte, peut être déplacé transversalement et/ou pivoté à l'encontre de la force de rappel et actionne le dispositif (19,20) pour engendrer ou introduire des signaux acoustiques (21,27,28) et/ou optiques (22).

6. Brosse à dents électrique selon la revendication 1, caractérisée en ce que l'arbre d'entraînement (13), avec au moins une partie du palier (9), lorsque la force de pressage médicalement nécessaire est atteinte, peut être courbé contre une force élastique (26) et/ou des contraintes de flexion, et en ce que l'arbre d'entraînement (13) ou la partie du palier (9) actionne directement le dispositif pour engendrer ou introduire des signaux (22) acoustiques (27,28) et/ou optiques.

7. Brosse à dents électrique selon la revendication 6, caractérisée en ce que l'arbre d'entraînement (3) et au moins une partie du palier (9) peuvent être courbés autour d'une gorge (25) préparée dans le palier.

8. Brosse à dents électrique selon la revendication 1, caractérisée en ce que le mécanisme à manivelle est formé par un tourillon (12) tournant de façon excentrique et deux bras de manivelle (10,10'), et en ce que les surfaces périphériques (31), en regard l'une de l'autre, des bras de manivelle (10,10') sont courbées l'une vers l'autre de façon convexe.

9. Brosse à dents électrique selon la revendication 1, caractérisée en ce que l'arbre d'entraînement (13), lorsque la force de pressage médicalement nécessaire est atteinte, actionne, directement un dispositif mécanique (27,28) pour engendrer des signaux acoustiques.

10. Brosse à dents électrique selon la revendication 1, caractérisée en ce que le dispositif mécanique pour engendrer des signaux acoustiques est formé par un corps cylindrique (27), agencé de façon fixe sur l'arbre d'entraînement (13) et muni de broches, de dents (27'') ou de saillies, et au moins une lame élastique (28) ou un cliquet agencé sur le boîtier (1) de la brosse à dents.

11. Brosse à dents électrique selon la revendication 10, caractérisée en ce que les dents (27''), broches ou saillies sont réalisées dans la surface périphérique ou dans un évidement du corps cylindrique (27).

12. Brosse à dents électrique selon la revendication 10, caractérisée par deux ou plusieurs lames élastiques indépendantes (28) ou cliquets, qui, lorsque la pression de pressage médicalement nécessaire est atteinte et lors de la mise en marche des broches, dents (27'') ou saillies des corps cylindriques (27), engendrent mécaniquement des signaux acoustiques ayant des fréquences identiques ou différentes.

13. Brosse à dents électrique selon la revendication 1, caractérisée en ce que le dispositif pour engendrer des signaux acoustiques est formé par un corps rotatif agencé sur l'arbre d'entraînement comportant des corps de percussion librement guidés et un corps en forme de plaque, une cloche ou membrane agencés dans le boîtier (1) de la brosse à dents.

14. Brosse à dents électrique selon la revendication 1, caractérisée en ce que le dispositif pour engendrer des signaux acoustiques est associé à une chambre de résonance (21') réalisée dans le boîtier de la brosse à dents.

15. Brosse à dents électrique selon la revendication 1, caractérisée en ce que le dispositif pour engendrer des signaux optiques est formé par une diode électroluminescente (LED) (22) ou une lampe à incandescence et un commutateur marche-arrêt (19,20) pouvant être actionné par l'arbre d'entraînement (13) directement.

16. Brosse à dents électrique selon la revendication 1, caractérisée en ce que l'arbre d'entraînement (13) traverse une ouverture de sortie (32) dans le boîtier (1) de la brosse à dents, et en ce que l'ouverture de sortie (32) est fermée de facon étanche par un sac en une matière souple ou élastique.

17. Brosse à dents électrique selon la revendication 1, caractérisée en ce qu'un élément galvanique rechargeable, par exemple une batterie ou un accumulateur, sert de source d'énergie.

18. Brosse à dents électrique selon la revendication 1, caractérisée en ce que l'élément galvanique peut être rechargé de façon inductive, et en ce que l'enroulement secondaire du dispositif de charge est agencé de façon fixe dans le boîtier (1) de la brosse à dents.
